# EUROPEAN PATENT APPLICATION

(11) **EP 4 518 170 A1**
(43) Date of publication of application: **05.03.2025**
(21) Application number: 24197780.0
(22) Date of filing: 31.08.2024
(51) Int. Cl.: H04B 3/56

(54) **CIRCUIT FOR ENHANCING THE INDUCTANCE OF A HIGH CURRENT INDUCTOR**

(30) Priority: 31.08.2023 TW 112133145; 18.01.2024 TW 113102128; 28.06.2024 TW 113124431
(71) Applicant: Hangzhou Lianxintong Semiconductor Co., Ltd., Hangzhou City Zhejiang (CN)
(72) Inventor: HSIN-HSIEN, Li, Zhubei City (TW); ZHANG, YONG-LIN, Zhubei City (TW)
(74) Representative: Lang, Christian

(57) **Abstract**

An isolator for separating a power line into a power consumption side and a transmission side can be used to enhance power line communication (PLC) and to prevent time varying noise and impedance of the power consumption side in a communication frequency band from affecting communication effects, wherein the isolator often has a larger inductance value. This disclosure provides a special circuit, wherein the inductor is kept at a low inductance value when a low frequency alternating current flows through the inductor, but is kept at a high inductance value in the communication frequency band, and a small core can be used to satisfy requirements of the high inductance value in the communication frequency band.

## Description

### FIELD OF THE INVENTION

This disclosure relates to a key component required for filters to improve power line communication (PLC) or to reduce EMI.

### DESCRIPTION OF RELATED ART

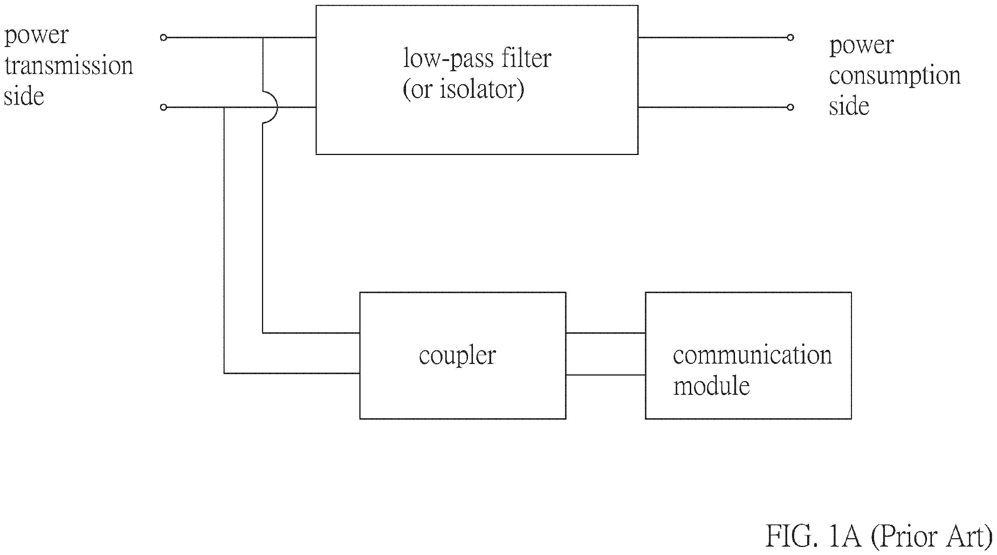

PLC has been widely used in many fields since the late 1990s. For example, HomePlug Powerline Alliance (HPA) has developed the HomePlug AV standard, Generation 3th Power Line Communication (G3-PLC), High speed PLC (HPLC) and the like. Because the power grid usually has the problems of the time-varying high noise and low impedance, its communication quality is generally poor. These problems can be solved by disposing a low-pass filter (or isolator) in front of a power consumption unit (power consumption side, including a modem itself). As shown in FIG. 1A, this low-pass filter has a low-pass 3dB frequency turning point far lower than a communication signal, can block the communication signal without affecting a power supply, and separates a power line into two sections including a power transmission side and the power consumption side. The communication signal of the modem communication module (communication unit) bypasses the low-pass filter through a coupler, and enters the power transmission side of the power line. Consequently, for the frequency band used by the communication signal of the communication module, the time-varying noise and the time-varying low impedance are isolated on the power consumption side, and the power transmission side has become a transmission medium having the stable impedance and the low noise, so that the communication effect can be significantly improved.

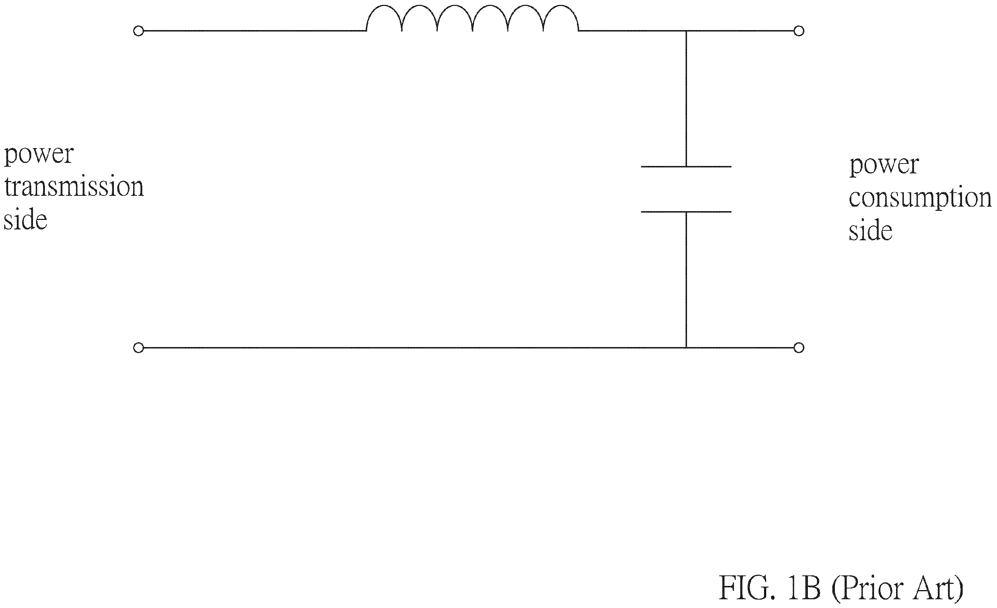

However, a high current generally flows on the power lines, so the inductor (used on the isolator) needs to have a very large core if the high current needs to flow through the inductor. So, the inductor is expensive, and cannot be easily installed due to the larger size. FIG. 1B is a schematic view showing a second order low-pass filter, which is a simplest isolator, wherein a higher inductance value of the inductor leads to a better isolation effect, but a larger size and a higher cost.

### SUMMARY OF THE INVENTION

This disclosure provides a circuit for enhancing the inductance of a high current inductor of power line communication (PLC). In the circuit, a coupler is used to sense a voltage across two ends of a main inductor, a correlated voltage (aV, where "a" is a coupling coefficient, is usually a constant, and is equal to 1 when coupling is performed by a large capacitor or even short circuiting) is coupled to a current generator. In addition, the coupler couples a current of the current generator back to the main inductor. An objective of the current generator is to replicate one or multiple correlated currents (a phase thereof is close to a phase of a current actually flowing through the inductor) to make the current flow into the main inductor and to suppress the current driven by the signal itself. Consequently, an inductance value of the main inductor is equivalently amplified to achieve the effect of the large inductance.

### BRIEF DESCRIPTION OF DRAWINGS

FIG. 1A shows the conventional technology of improving PLC communication.
FIG. 1B shows a circuit of a common second order low-pass filter.
FIGS. 2A to 2D are schematic views showing several embodiments of this disclosure.
FIGS. 3A and 3B are schematic views showing the embodiments of this disclosure.
FIGS. 4A and 4B are schematic views showing a replicated current flowing into a transformer to decrease an input current.
FIG. 5A shows a circuit for generating a large inductance for a signal frequency band using a differential inverting linear driver in conjunction with a 1:1 transformer.
FIG. 5B is a schematic view showing another embodiment of a current generator 202 of FIG. 2D.
FIG. 6 shows a circuit for generating a large inductance for a signal frequency band using a differential inverting linear driver in conjunction with a 1:M transformer.
FIG. 7 shows a method of using a previous invention in conjunction with the circuit of this disclosure to achieve the stable and mass-producible 100 times inductance.
FIG. 8 shows a method of two transformers combined to achieve the stable and mass-producible 100 times inductance.
FIG. 9A is a schematic view showing another embodiment of the current generator 202.
FIG. 9B is a schematic view showing the circuit of this disclosure in an embodiment.
FIGS. 10A to 11C are schematic views showing the prior art.
FIG. 12 is a schematic view showing an embodiment of this disclosure.
FIGS. 13 to 20 are schematic views showing embodiments of this disclosure.

### DETAILED DESCRIPTION OF THE INVENTION

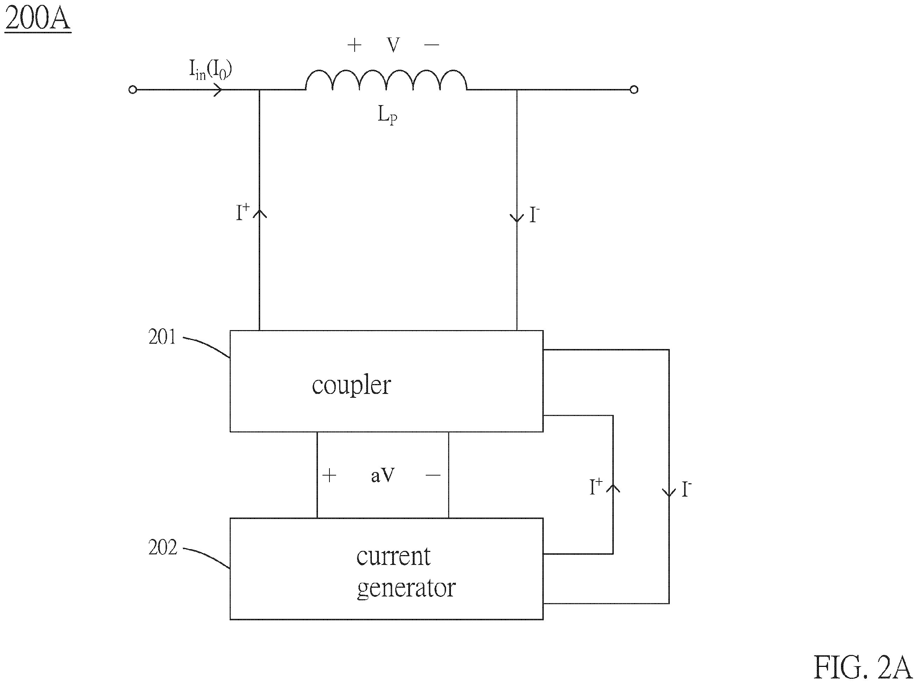

This disclosure provides a component, which has a low inductance value upon transmission of a high current at a low frequency, but a high inductance value in a frequency band of a high-frequency communication signal, so that a requirement of an isolator can be satisfied without a large core. FIG. 2A shows a circuit 200A for improving high-current inductance of power line communication (PLC). Referring to FIG. 2A, the circuit 200A includes a main inductor L_{P}, a coupler 201 and a current generator 202. A first current Iᵢₙ correlating to a communication signal flows through the main inductor L_{P} to generate a voltage V correlating to the communication signal. The main inductor L_{P} is disposed on a power supply line, while an alternating current (AC) (50 or 60 Hz in general) or a direct current (DC) flows through the main inductor L_{P}.

The main inductor L_{P} has two ends, and the first current Iᵢₙ having a current value I₀ flows through the main inductor L_{P} to supply the voltage V. The coupler 201 senses the voltage V across the two ends of the main inductor L_{P} or a predetermined ratio of the voltage across the two ends of the main inductor L_{P}, and generates a coupling voltage aV, where "a" is a coupling coefficient in this embodiment. The current generator 202 is coupled to the coupler 201. The current generator 202 receives the coupling voltage aV according to the coupler 201 or another coupler and generates a second current I⁺. In addition, the current generator 202 utilizes the coupler 201 or the another coupler to couple the second current I⁺ to the main inductor L_{P}, and finally a second current I⁻ flows back to the coupler 201 and then back to the current generator 202. The current generator 202 has an output impedance that must be high.

An objective of the current generator 202 is to replicate the first current Iᵢₙ to generate the second current I⁺, wherein a phase and a value of the second current I⁺ are close to those of the first current Iᵢₙ flowing through the main inductor L_{P}, so that the second current I⁺ flows into the main inductor L_{P} to suppress the first current Iᵢₙ driven by the communication signal of the circuit 200A itself. The first current Iᵢₙ having the current value of I₀ is generated by a communication signal source and flows into the main inductor L_{P}.

In other words, the circuit 200A utilizes one coupler 201 to sense the voltage V across the two ends of the main inductor L_{P}, and to couple a correlated voltage aV to the current generator 202, wherein the current generated by the current generator 202 flows back to the main inductor L_{P}. Generally speaking, the coupler 201 has a high-pass filter function for a main objective to filter out a low-frequency electric power wave, wherein the simplest method is to adopt serially connected capacitors. The objective of the current generator 202 is to replicate one or multiple second currents I⁺ correlating to the first current Iᵢₙ. That is, the phase and the value of the second current I⁺ are close to those of the first current Iᵢₙ actually flowing through the main inductor L_{P}, so that the second current I⁺ flows into the main inductor L_{P} to suppress the first current Iᵢₙ driven by the signal itself.

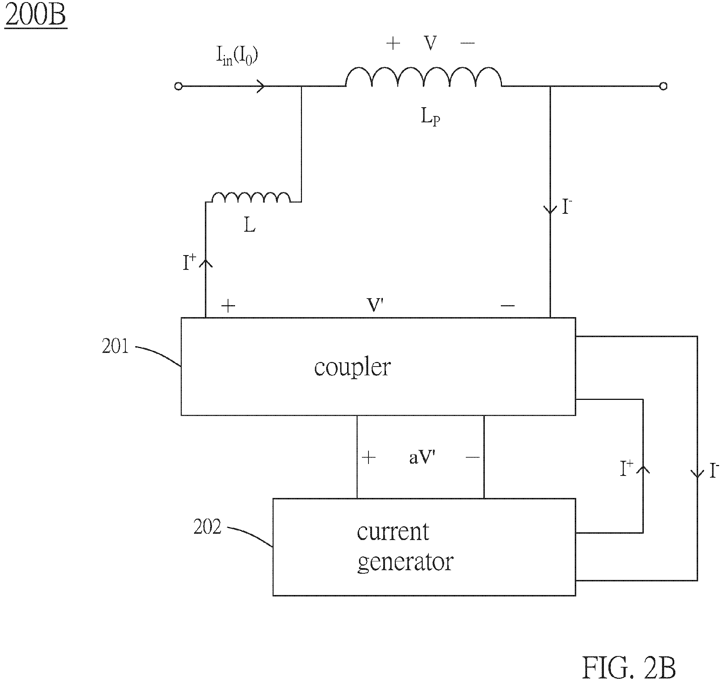

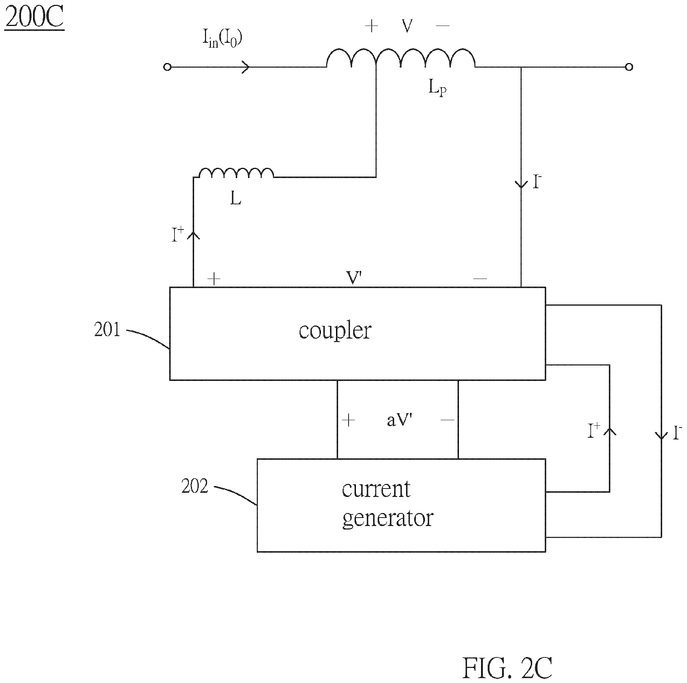

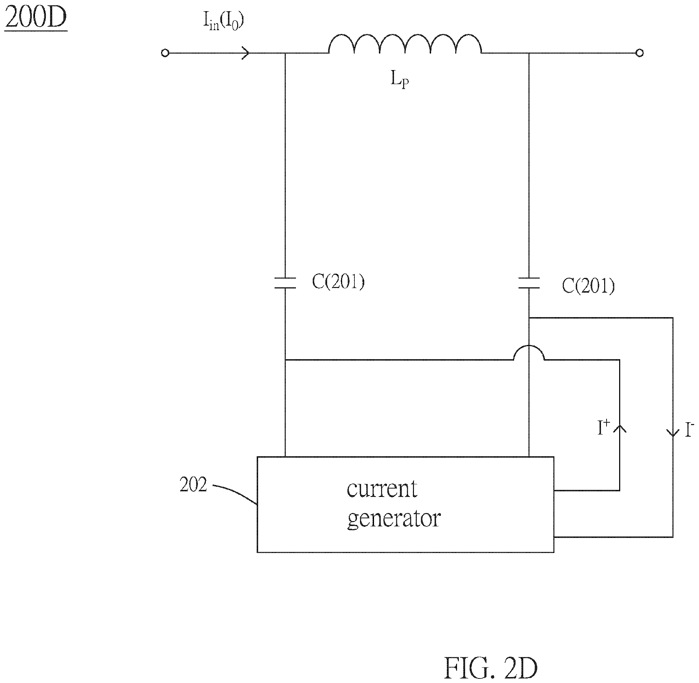

In addition, as schematically shown in FIGS. 2B and 2C, circuits 200B and 200C may also make the second current I⁺ flow into a coil of another inductor L. The coil of the inductor L and the coil of the main inductor L_{P} are serially connected together and wound around the same winding core, the inductor L is parallelly connected between the coupler 201, the main inductor L_{P} and the power transmission side. The inductor L can generate a magnetic flux change within the core to suppress the current flowing through the original inductor. The low-frequency power supply current only flows through the main inductor L_{P}. In addition, the main inductor L_{P} supplies the first current Iᵢₙ and an AC signal correlating to the communication signal, so the wire wound around the main inductor L_{P} has the larger diameter. However, in the schematic views of FIGS. 2B and 2C, only the second current I⁺ for suppressing the first current Iᵢₙ flows through the newly wound inductor L. So, the wound wire of the inductor L may have the smaller diameter as compared with that of the coil of the main inductor L_{P}. In other words, only the current of the communication signal flows through the coil of the inductor L, so the diameter of the coil of the inductor L is smaller than the diameter of the coil of the main inductor L_{P}. The input current value can be changed according to the winding variation of the inductor L. For example, the similar effect of suppressing the first current Iᵢₙ can be achieved as long as the second current I⁺ (the suppression current for suppressing the first current Iᵢₙ) in FIG. 2B is smaller than the second current I⁺ in FIG. 2A. In this embodiment, the coil of the inductor L is coupled to a predetermined position in the coil of the main inductor L_{P}, which means that the coil of the inductor L is coupled to the position of the coil of the main inductor L_{P} that is not the terminal of the main inductor L_{P}. For the communication signal source, the decrease of the first current Iᵢₙ is equivalent to the increase of the main inductance value. That is, the effect of increasing the high inductance value can be achieved according to the magnetic flux change generated by the second current I⁺ in the core. In this embodiment, the coupler 201 senses the predetermined ratio of the voltage V' across the two ends of the main inductor L_{P}, and generates a coupling voltage aV'. The simplest coupling circuit only needs two capacitors C, as shown in FIG. 2D. Because the low-voltage capacitor is cheaper, such the circuit is applicable to the low-voltage circuit.

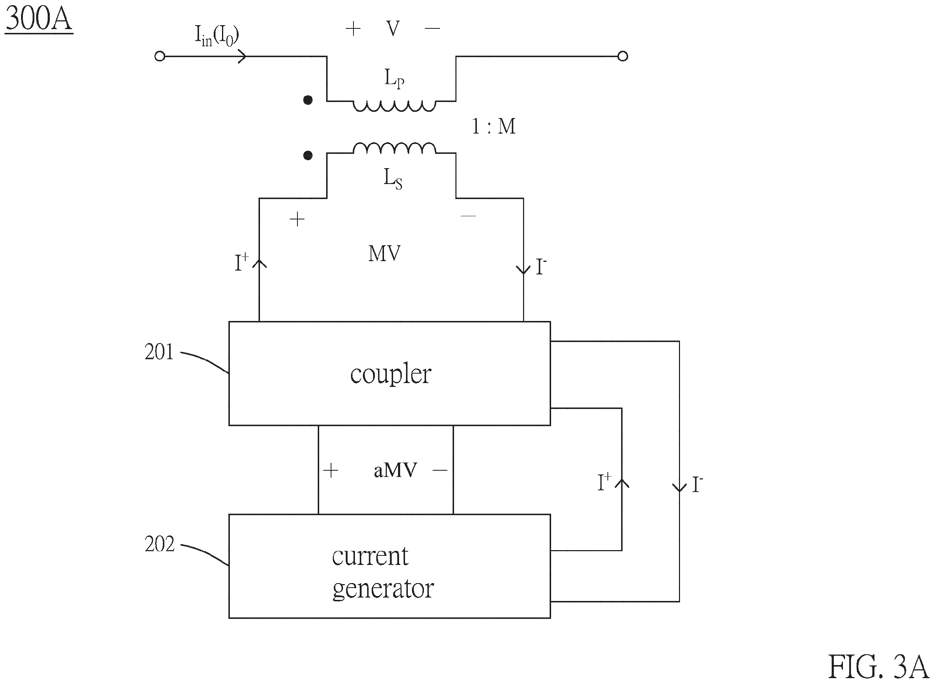

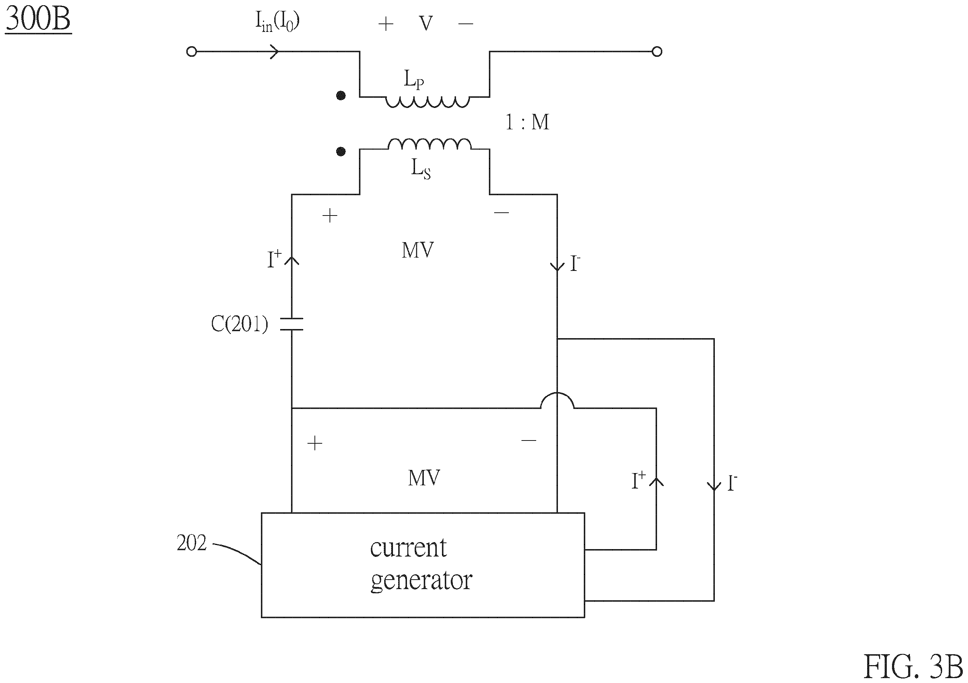

As schematically shown in FIG. 3A, a coil of a secondary-side inductor Ls of a circuit 300A is separated from the coil of the main inductor L_{P}, wherein the first current Iᵢₙ correlating to the communication signal flows through the main inductor L_{P} to generate the voltage V correlating to the communication signal. The main inductor L_{P} is disposed on a power supply line, while an AC (50 or 60 Hz in general) or a direct current flows through the main inductor L_{P}. The secondary-side inductor Ls is coupled to the coupler 201. That is, the circuit 300A may also make the second current I⁺ flow into another or other coils wound around the core of the original main inductor L_{P}. These coils are separated from the coil of the main inductor L_{P} (equivalent to a transformer), and only a magnetic flux change needs to be generated in the core to suppress the first current Iᵢₙ flowing through the main inductor L_{P}. In this embodiment, the ratio of the number of the coil of the main inductor L_{P} to the number of the coils of the secondary-side inductor Ls is 1:M, where M is a constant. The secondary-side inductor Ls generates a voltage MV according to the voltage across the two ends of the main inductor L_{P} or a predetermined ratio of the voltage across the two ends of the main inductor L_{P}. The coupler 201 senses the voltage across the two ends of the secondary-side inductor Ls or a predetermined ratio of the voltage across the two ends of the secondary-side inductor L_{S}, and generates a coupling voltage aMV. The current generator 202 receives the coupling voltage aMV through the coupler 201 or the another coupler to generate the current I⁺. The current generator 202 is coupled to the current I⁺ through the coupler 202 or the another coupler, so that the main inductor L_{P} generates the counter-electromotive force. The objective of the current generator 202 is to generate the second current I⁺ for replicating the magnetic field, generated by the first current Iᵢₙ in the core of the main inductor L_{P}, to suppress the first current Iᵢₙ driven by the communication signal of the circuit 300A itself. In other words, the second current I⁺ flows into the secondary-side inductor Ls but not the main inductor L_{P} to suppress the first current Iᵢₙ flowing through the main inductor L_{P}, and the transformer formed by the main inductor L_{P} and the secondary-side inductor Ls isolates the high voltage of the power transmission side from entering the coupler 201. For the AC power network, the voltage of 50/60 Hz of the current generator 202 is higher, and may be higher than 300 volts. At this time, using the transformer to isolate the high voltage from entering the coupler 201 needs the lower cost. As schematically shown in FIG. 3B, a capacitor C is used as a simplest coupler 201 in a circuit 300B. The capacitor C has the impedance that can be ignored in the communication frequency band, and can filter out a low-frequency AC signal. If a voltage drop generated by the low-frequency AC signal in the primary coil is extremely small, then this capacitor may be omitted.

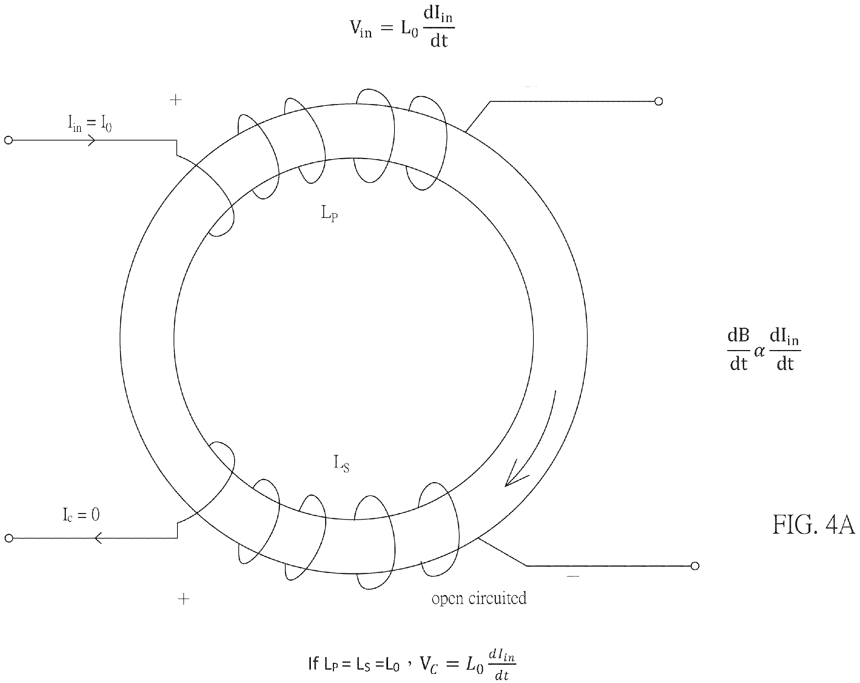

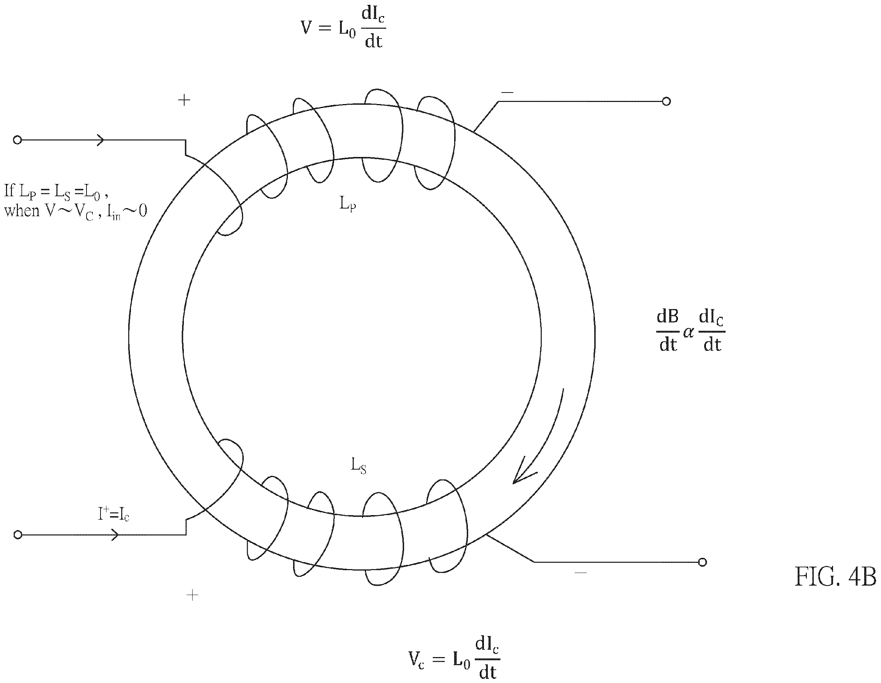

FIG. 4A is a schematic view showing the transformer in one embodiment of FIG. 3A. As schematically shown in FIG. 4A, this embodiment uses a 1:1 transformer. When the current generator 202 does not generate a current (the current value I_{c} of the second current I⁺ generated by the current generator 202 is equal to 0), the coil of the main inductor L_{P} on the power transmission side is a pure inductor, and a voltage drop across the two sides of the main inductor L_{P} reflects on the other end of the transformer. As schematically shown in FIG. 4B, the main concept of using the transformer to suppress the first current Iᵢₙ inputted from the power transmission side is to generate the magnetic field in the transformer using the second current I⁺ of the current generator 202, so that the voltage Vc generated on the secondary-side inductor Ls according to the magnetic flux variation approaches the crossover voltage V of the main inductor L_{P} (voltage Vc cannot be higher than the crossover voltage V, or otherwise oscillation will be generated). Consequently, the main inductor L_{P} generates the effect equivalent to the higher inductance. The current generator 202 in this circuit in the low-frequency AC frequency band (50/60 Hz) cannot generate a current flowing into the coil of the secondary-side inductor Ls (the coupler 201 filters out the low frequency signal), and the output impedance of the current generator 202 is higher, so that the current generator 202 is equivalent to being open circuited. So, the transformer (the main inductor L_{P} and the secondary-side inductor Ls) at the low frequency is a small inductor (the inductor has to be selected such that the magnetic saturation cannot be generated when the maximum AC flows therethrough), so that a component having the high inductance at only the high frequency (in the communication frequency band) can be produced. When the second current I⁺ generated by the current generator 202 senses the reverse voltage on the main inductor L_{P} as approaching V, the first current Iᵢₙ approaches zero.

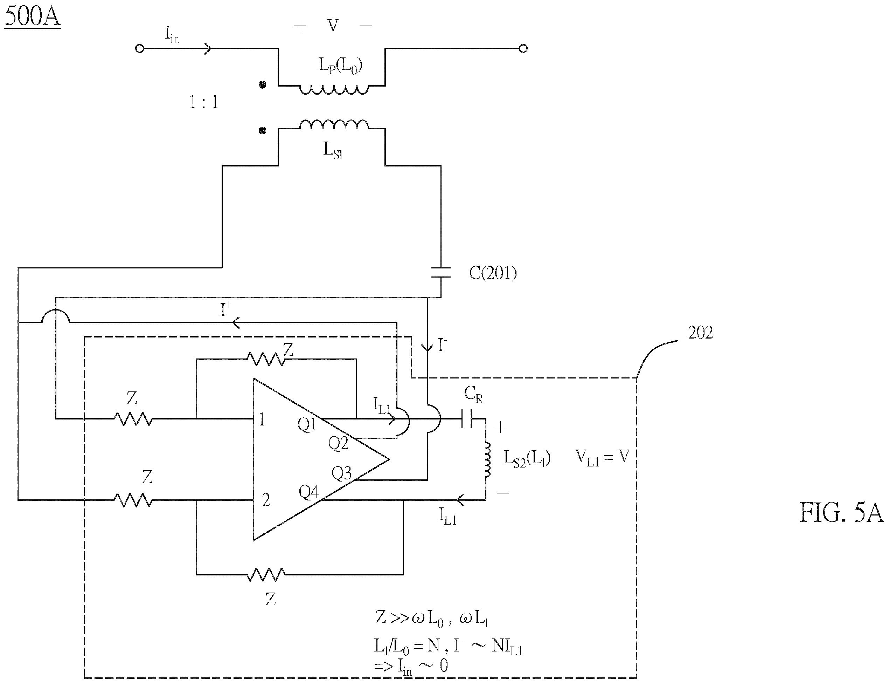

The above-mentioned concept may be implemented by various known circuits, and several examples will be described in the following. As schematically shown in a circuit 500A of FIG. 5A, the main inductor L_{P} has the inductance value L₀, the main inductor L_{P} and a secondary-side inductor L_{S1} constitute a transformer, and the circuit 500A may utilize the transformer to extract the crossover voltage V across the two ends of the main inductor L_{P} of the isolator. In this embodiment, the current generator 202 of the circuit 500A is implemented by a differential linear driver, which drives, at its load side, another reference inductor L_{S2} having the inductance value L₁, the current flowing through the reference inductor L_{S2} is I_{L1}, L₁/L₀=N, and the main inductor L_{P} and the secondary-side inductor L_{S1} have the same number of windings (i.e., the main inductor L_{P} and the secondary-side inductor L_{S1} become a 1:1 transformer). In this case, the current generator 202 only needs to replicate the current value (I=N×I_{L1}) of the flowing-in current I⁺. At this time, the first current Iᵢₙ on the power transmission side approaches zero, which means that the equivalent inductance value is significantly increased. In this embodiment, the differential linear driver has a first input terminal 1 and a second input terminal 2 respectively coupled to an input terminal and an output terminal of the secondary-side inductor L_{S1}, and the differential linear driver has a first output terminal Q1, a second output terminal Q2, a third output terminal Q3 and a fourth output terminal Q4. The first output terminal Q1 and the fourth output terminal Q4 function as the load side serially connected to the inductor L_{S2}. The first input terminal 1 and the third output terminal Q3 are parallelly coupled to the coupler 201 (the capacitor C in this embodiment); the second output terminal Q2 is parallelly coupled to the second input terminal 2; a matching resistance Z is formed between the first input terminal 1 and the coupler 201, a matching resistance Z is formed between the second input terminal 2 and the second output terminal Q2; the first input terminal 1 and the first output terminal Q1 are parallelly connected to a matching impedance Z; and the second input terminal 2 and the fourth output terminal Q4 are parallelly connected to a matching impedance Z. In this embodiment, the matching impedance Z has the impedance value far larger than ωL₀ or ωL₁ in the communication frequency band. In order to prevent the differential linear driver from generating the DC (because the circuit itself is not completely balanced) or 50/60 Hz low-frequency current, the reference inductor L_{S2} may be serially connected to a large capacitor C_{R}, as schematically shown in FIG. 5A.

Please note that the current generator 202 may have one or multiple amplifiers and the reference inductor L_{S2} to function as a current replicating circuit working according to a voltage V_{L1} provided from the amplifier to the two ends of the reference inductor L_{S2}. The voltage V_{L1} across the two ends of the reference inductor L_{S2} and the voltage V across the two ends of the main inductor L_{P} have a proportional relationship, so the current I_{L1} flows into the reference inductor L_{S2}, and the current replicating circuit generates the current I⁺, which is to be outputted and has a proportional relationship to the current I_{L1} on the reference inductor L_{S2}.

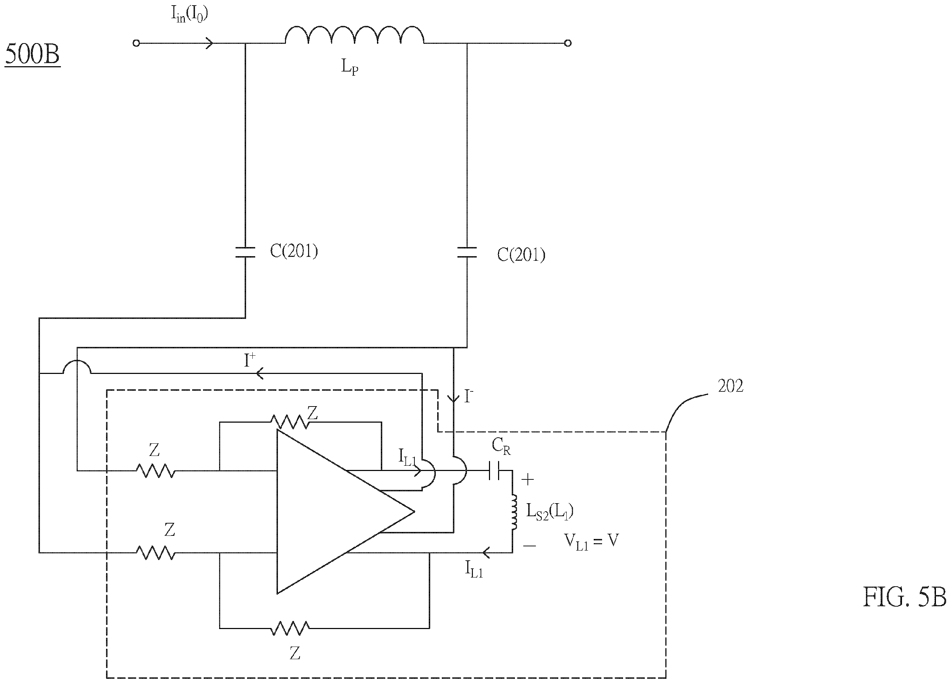

Similarly, FIG. 5B is a schematic view showing a circuit 500B that is another embodiment of the current generator 202 of FIG. 2D. The current generator 202 is also implemented by a differential linear driver, which drives, on its load side, another reference inductor L_{S2}, wherein the principles thereof have been previously mentioned, and detailed descriptions thereof will be omitted.

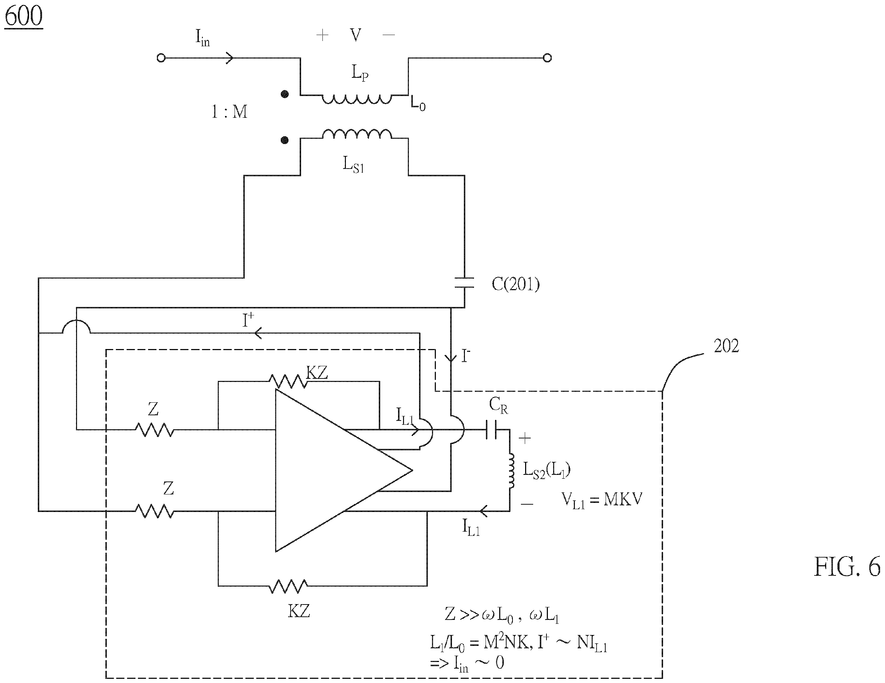

As schematically shown in a circuit 600 of FIG. 6, in order to decrease the power loss of the linear driver, if a supply voltage Vcc (not shown) of the linear driver is higher than the signal source voltage, then the number of windings of the inductor can be adjusted up to M times. At this time, if the feedback impedance of the linear driver is equal to K times of the input impedance (K is a constant), then L ₁ / L ₀ = M ² × N × K, and the linear driver replicates the current I⁺, which flows into a secondary-side inductor or the transformer and has the current value I=N×I_{L1}. In an ideal state, the signal source generates the current value I₀, which flows into the main inductor L_{P} and approaches zero.

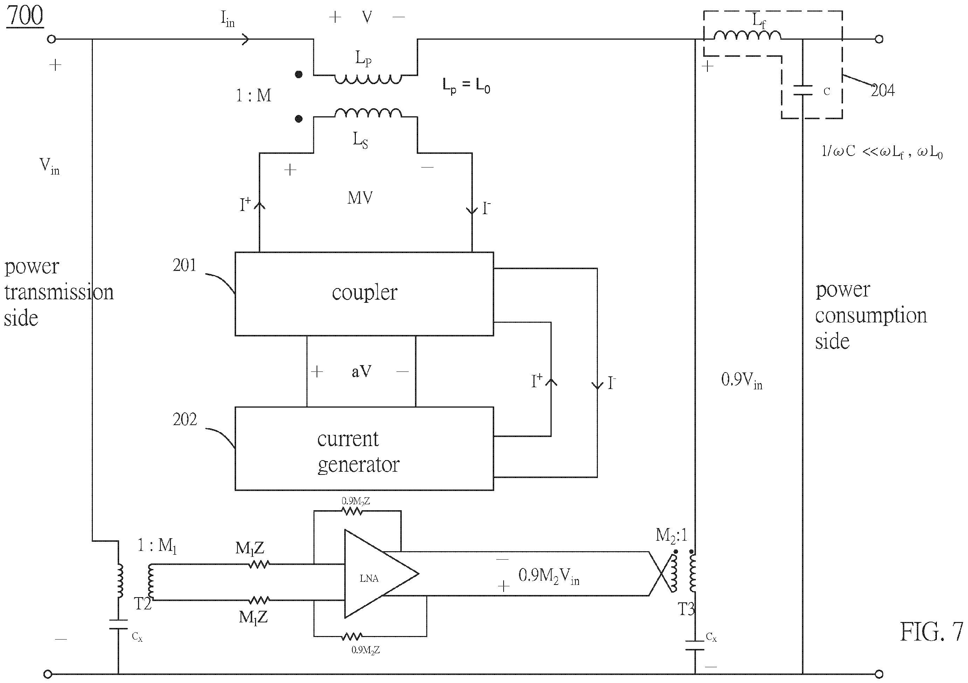

Considering the actual conditions, including inaccuracies such as temperature changes, time delays, or component accuracy, it is relatively difficult to make the equivalent inductance value reach a very high multiple and achieve the mass production in order to prevent the circuit from oscillation. As schematically shown in FIG. 7, a circuit 700 further includes a linear amplifier LNA disposed between the power transmission side and the power consumption side. The linear amplifier LNA couples the transformers T2 and T3 to the power transmission side and the power consumption side, respectively. Input terminals of the linear amplifier LNA are coupled to two ends of the secondary coil of the transformer T2. The input terminals of the linear amplifier LNA and the two ends of the secondary coil of the transformer T2 are respectively coupled to input impedances M₁Z. Output terminals of the linear amplifier LNA are coupled to two ends of the primary coil of the transformer T3. Output impedances 0.9M₂Z are respectively parallelly connected between the output terminals and the input terminals of the linear amplifier LNA. The circuit 700 utilizes one linear amplifier LNA to make the voltage on the other side of the main inductor L_{P} become 0.9M₂Vᵢₙ (in the example of FIG. 7, the ratio of the numbers of turns of the coupling transformer T2 is 1:M₁ (M₁ is a constant), and the ratio of the input impedance to the output impedance is M ₁ : 0.9M ₂ ). A low-pass filter 204 for filtering out the noise on the power consumption side is connected to and disposed in back of the main inductor L_{P}. If the low-pass filter 204 has the capacitor impedance (1 /ωC) far less than the inductor impedance (ωLf) of the low-pass filter 204 in the communication frequency band, then the main inductor L_{P} has the inductance value L₀, the main inductor L_{P} has the crossover voltage 0.1Vᵢₙ, and the inductor L_{f} in the low-pass filter 204 has the crossover voltage 0.9Vin. At this time, the current value I₀ of the first current Iᵢₙ flowing through the main inductor L_{P} is equal to 0.1 times of the original current value, and this is equivalent to that the inductance value L₀ of the main inductor L_{P} has the increase of 10 times that of the original inductance value. Next, the magnetic flux change is generated according to the output current I⁺ of the current generator 202, and the current value I_{c} of the current I⁺ is also equal to 0.9 times that of the original isolating inductor (in the example of FIG. 6, I⁺=0.9×N ×I_{L1}). So, this circuit can averagely increase the inductance value by 100 times, wherein the actual value falls between 50 and 200 times, and the circuit is also stable without oscillation.

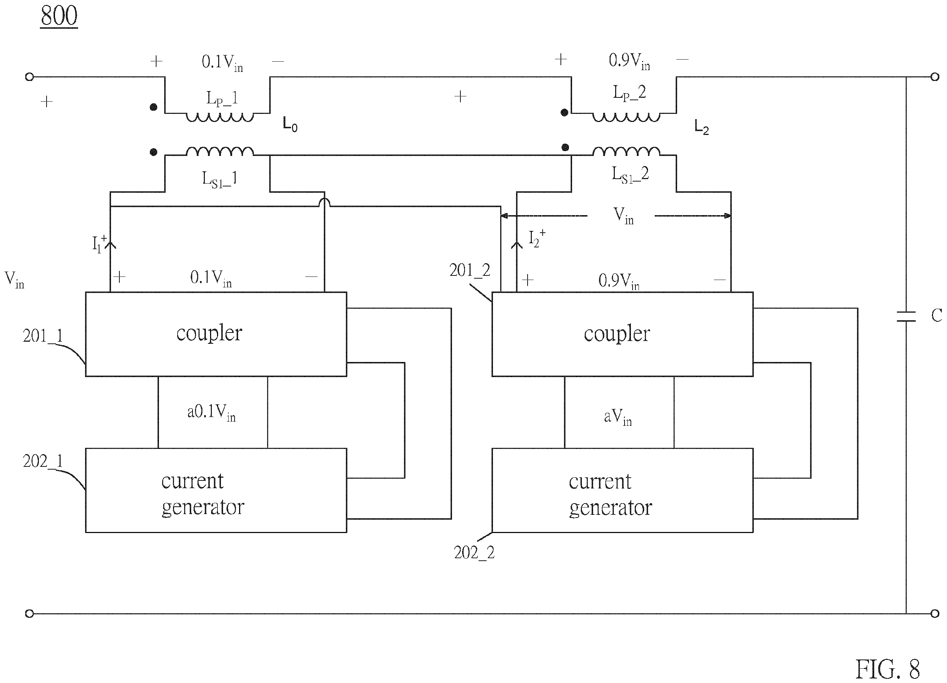

As schematically shown in FIG. 8, a circuit 800 of another embodiment utilizes two main inductors L_{P}_1 and L_{P}_2 (or transformers) respectively having corresponding secondary-side inductors L_{S1}_1 and L_{S1}_2, couplers 201_1 and 201_2, and corresponding current generators 202_1 and 202_2. The main inductors L_{P}_1 and L_{P}_2 have the inductance values respectively equal to L₀ and L₂. The transformer of the main inductor L_{P}_1 has the corresponding coupler 201_1 and current generator 202_1. The transformer of the main inductor L_{P}_2 has the corresponding coupler 201 _2 and current generator 202_2. The coupler 201_2 has two positive output terminals with the currents I₂⁺, wherein one of the positive output terminals of the coupler 201_2 is coupled to the positive output terminal of the coupler 201_1 with the current I₂⁺, and the other one of the positive output terminals of the coupler 201_2 is coupled to the input terminal of the secondary-side inductor L_{S1}_2. Please note that the output terminal of the secondary-side inductor L_{S1}_1 is coupled to the input terminal of the secondary-side inductor L_{S1}_2 to ensure that the coupler 201 _2 is coupled to the input terminal of the secondary-side inductor L_{S1}_1, and the coupler 201_2 is coupled to the output terminal of the secondary-side inductor L_{S1}_2, wherein the crossover voltage therebetween is equal to Vᵢₙ. A filter capacitor C is parallelly connected to the rear power consumption side of the circuit 800. If the filter capacitor C has, in the communication frequency band, the impedance far less than the impedances of the main inductors L_{P}_1 and L_{P}_2, then the input voltage Vᵢₙ of the power transmission side is equivalent to a sum of the voltage drops of the main inductors L_{P}1_1 and Lp1_2. The output currents are divided into two sets (I₁⁺ and I₂⁺), wherein the output current I₂⁺ is higher and coupled to the location close to the power consumption side. In other words, the second currents outputted from the current generators 202_1 and 202_2 are divided into two sets according to the ratio of the voltage drops of the main inductors L_{P}_1 and L_{P}_2 in the two transformers, wherein the maximum output current I₂⁺ therein is coupled to the location close to the power consumption side. The reference voltages of the current generators 202_1 and 202_2 are equal to the sum of the crossover voltages of the two sets of secondary-side inductors L_{S1}_1 and L_{S1}_2 (if the coupling coefficient a=1), wherein the reference voltage of the current generator 202_1 comes from the crossover voltage of the secondary-side inductor L_{S1}_1. The key to this design resides in that the circuit 800 can obtain the increase of 100 times of the inductance value when the tolerance for component errors can be kept below 5% (rather than 1% or less). For example, if the error of the current generator 202_2 makes the actual crossover voltage of the main inductor L_{P}_2 become 0.95 Vᵢₙ, then the current generator 202_1 generates I₁⁺ according to the crossover voltage of 0.05 Vᵢₙ, so that the accuracy requirement remains at 5%. If the main inductors Lp_1 and L_{P}_2 have the same inductance value, the voltage on the main inductor L_{P}_2 is equal to Vᵢₙ, and the current value is equal to I₀, then the current generator (the input voltage is Vᵢₙ) generates I₂⁺ ~ 0.89 I₀; I₁⁺ ~ 0.09 I₀, and this circuit 800 may also averagely increase the inductance value by 100 times, wherein the actual value falls between 50 and 200 times, and the circuit is also stable without oscillation. The main reason is to generate two stages of voltage drops, wherein the voltage drop close to the signal terminal (power transmission side) is equal to only 0.1 times of the original voltage drop (i.e., 0.1 Vᵢₙ), and there is 90% of current coupled from the current generator 202_1. So, the signal source itself only needs to bear 1% of current to increase the inductance by 100 times.

The circuit using two inductors (or transformers) may be similarly extended to form a multi-inductor circuit for generating multiple sets of currents to increase the inductance value.

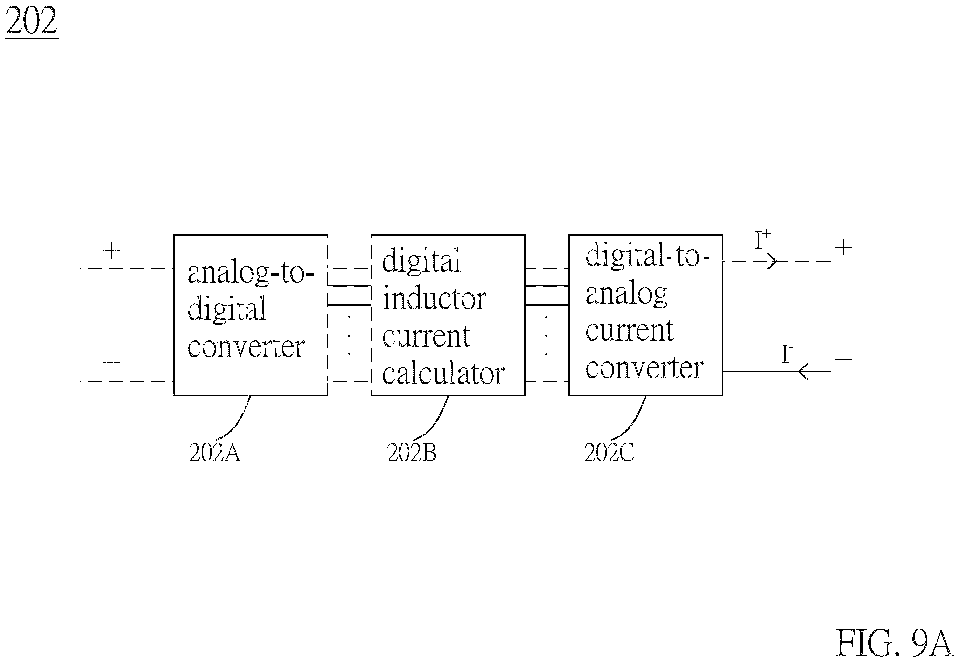

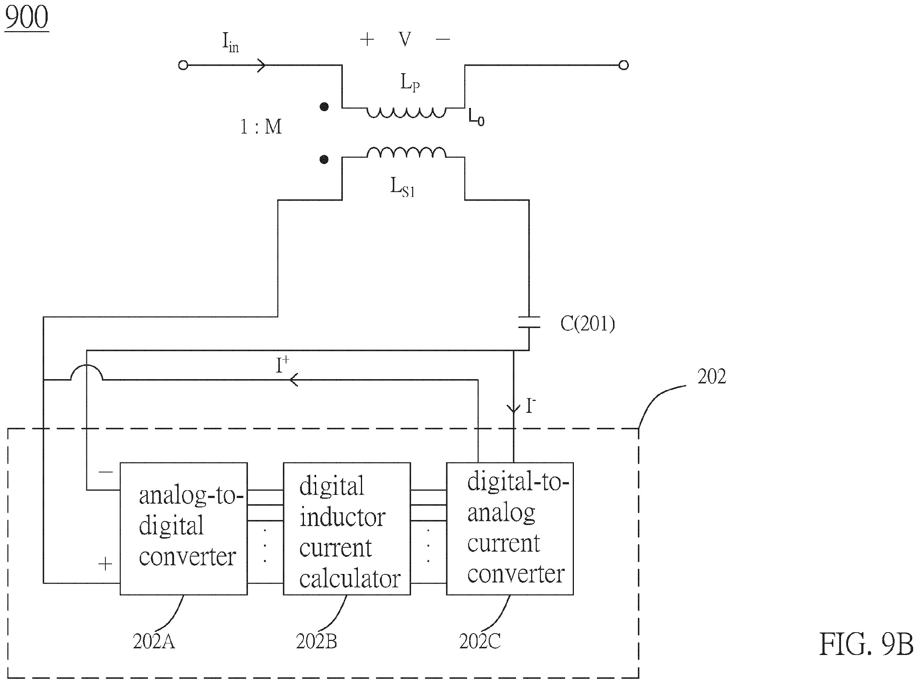

FIG. 9A is a schematic view showing another embodiment of the current generator 202. FIG. 9B is a schematic view showing the circuit of this disclosure in an embodiment. Referring to FIGS. 9A and 9B in this embodiment, the current generator 202 is mainly constituted by an analog-to-digital converter 202A, a digital inductor current calculator 202B and a digital-to-analog current converter 202C. The digital inductor current calculator 202B is a digital circuit. The analog-to-digital converter 202A performs digitization according to the coupling voltage, and transmits the digitized result to the digital inductor current calculator 202B, which calculates the digitized message of the output current of the first inductor L_{S1}, and the message is transmitted to the digital-to-analog current converter 202C that generates the actual current I⁺.

So, in addition to the method of utilizing the coupling voltage applied to an actual reference inductor to replicate the current of the main inductor, the analog-to-digital converter may also be used to digitize the coupling voltage, then the current of the inductor is predicted by way of digital calculation, and then the digitized message is outputted to the digital-to-analog current converter to generate the actual current returned to the coupler, as schematically shown in FIG. 9B. Using this method does not need the reference inductor, but the operation clock for the calculation circuit needs to be high to avoid the generation of the too long time delay, which affects the current suppression effect of the high-frequency signal.

As previously mentioned, an isolator for separating the power line into the power consumption side and the power transmission side can be used to improve the power line communication (PLC) to prevent the time varying noise and impedance of the power consumption side in the communication frequency band from affecting the communication effects. The isolator needs a differential mode filter to suppress the differential mode noise, and also needs a common mode choke to suppress the common mode noise. The common mode choke often needs to use one pair of inductors with larger inductances. If the isolator is disposed on a path through which a higher alternating current flows (e.g., an entrance of an electricity meter), then the common mode choke made by the conventional process needs a large core and a sufficient number of windings to achieve the effect of suppressing the common mode noise. Also, in order to keep the temperature rise of the isolator within a safe range when a high power current flows through the copper wire, the cross-sectional area of the copper wire must also be large enough. So, the common mode choke is expensive and has a larger size. The common mode choke is also frequently used to suppress the electromagnetic interference (EMI) from the high power current apparatus to comply with the safety regulations. This disclosure mainly utilizes an active current generator circuit to enhance the common mode and differential mode noise suppressing effects or to enhance the EMI suppressing effect, so that the cost and size of the isolator or the EMI suppression circuit can be reduced. Because the length of the copper wire is decreased, the energy consumption of the isolator or the EMI suppression circuit is also lower than that of the prior art, and the energy loss is reduced.

In order to improve the power line communication (PLC), the isolator is used to filter out the on-line noise. The isolator is usually composed of passive inductors and capacitors, and the isolator needs to concurrently filter out the common mode noise and the differential mode noise, so the isolator usually includes the common mode choke. If the isolator is disposed on the path of the high power current, then its inductor usually has the large size and the high cost, and the copper wire wound around the core is also longer and also consumes the higher electrical energy. The common mode choke is also frequently used to suppress the electromagnetic interference (EMI), and thus has the very wide applications. This technology utilizes the active circuit to enhance the effects of the isolator and the EMI suppression circuit, to decrease the cost and size, and to decrease the energy consumption caused by the heating of the copper wire.

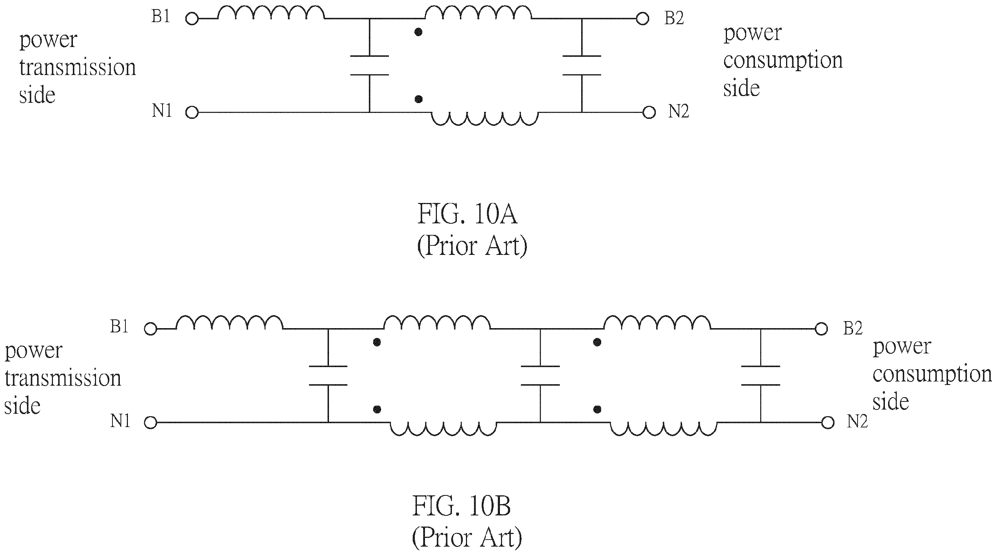

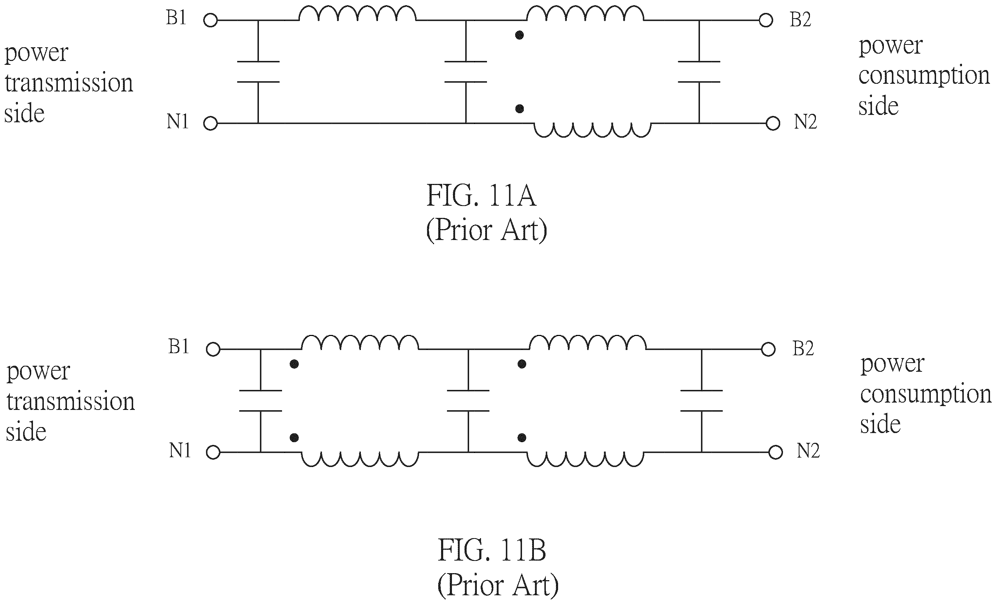

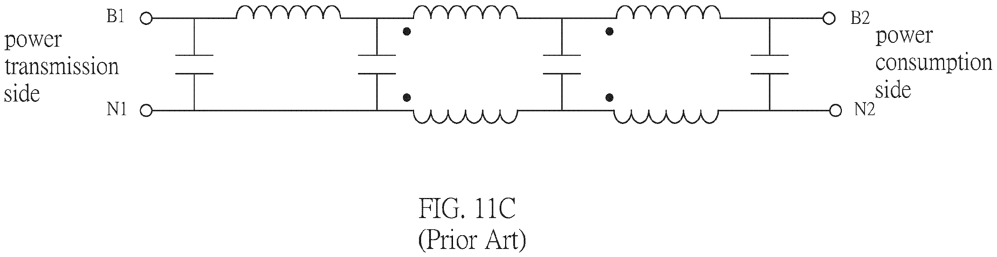

In addition, the isolator is usually composed of passive inductors and capacitors. Generally speaking, the isolator is a high-frequency filter for filtering out the noise including the differential mode noise and also including the common mode noise. So, the utility isolator usually needs to filter out the differential mode noise and the common mode noise concurrently, as shown in FIGS. 10A and 10B showing conventional common isolator circuits. The common mode choke occupies an important position in the isolator, and is mainly used to suppress the high-frequency common mode noise or common mode current. In addition to the isolator, the common mode choke is also frequently used to suppress the EMI of the high current apparatus to satisfy the safe regulations, as shown in FIGS. 11A, 11B and 11C. The circuit for purely suppressing the EMI needs not to consider the higher input impedance at the power transmission side, so capacitors are usually parallelly connected to two sides. As shown in FIG. 11B, due to the problem of the magnetic flux leakage, the common mode choke also has some effects of the differential mode filter, so there are also some EMI suppression circuits that are fully composed of common mode chokes and capacitors.

The common mode choke usually needs a larger core and thicker copper wire windings to achieve the higher common mode inductance value, and the temperature rise needs to be controlled within the safe range when a rated electric power current flows therethrough. Because the two conditions need to be satisfied concurrently, the common mode choke, through which the high power current can flow, frequently has the large-size and high-cost problems.

This embodiment discloses an active common mode or differential mode choke and power line filter including: at least three sets of coils, wherein the electric power current flows through two sets of the coils (the magnetic fields generated by the low-frequency electric power current can destruct (weaken) each other, and the magnetic fields, generated when the high-frequency common mode noise current flows therethrough, can construct (strengthen) each other), and a high-frequency suppression current flows through the other set of the coils; an active suppression-current generating circuit, which is coupled to the coils and generates an active suppression current; and a capacitor coupled to the two sets of the coils, through which the electric power current flows, to function as the power line filter; wherein the active suppression-current generating circuit generates a correspondingly proportional suppression current according to the common mode noise current to generate a magnetic field, which is generated by an original common mode noise current at the core(s) of the coils, to suppress the common mode noise current from flowing through the two sets of the coils, through which the electric power current flows.

In addition to the common mode choke, the isolator circuit or the EMI suppression circuit also collocates with some differential mode coils, and there are various mixing and winding methods available. These differential mode coils may also be strengthened using a similar active current suppression circuit so that the effects of decreasing the cost/size/power consumption can be concurrently achieved.

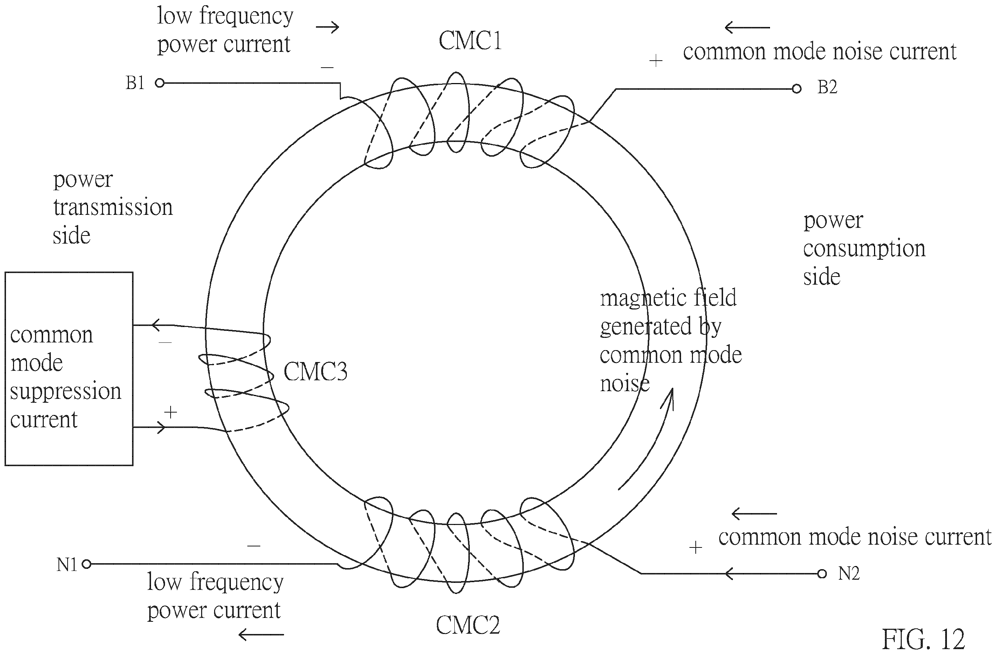

Similar to the previously disclosed high-current inductor circuit, the common mode choke of this disclosure may also adopt the active suppression current to enhance its equivalent inductance value. FIG. 12 is a schematic view showing this disclosure when the common mode noise current flows into common mode coils CMC1 and CMC2. Referring to FIG. 12 of this embodiment, when the common mode noise current flows into the common mode coils CMC1 and CMC2, a magnetic field is generated in the core. If a similar magnetic field can be generated through another active common mode suppression current, then it is possible to suppress the common mode noise current from flowing through the common mode chokes CMC1 and CMC2. In an ideal condition, the common mode noise current can completely suppress the common mode noise current through the magnetic field generated by the active suppression current. In one embodiment, if the noise currents flow through two paths of ports of the common mode coils CMC1 and CMC2 of the common mode choke, such as the path of the ports B1 and B2, and the paths of the ports N1 and N2 have different values and phases, then the suppressed noise is the average of the two paths of noise, and the remaining noise is in the form of differential mode, and the noise influence can be further decreased through another differential mode filter circuit. In FIG. 12, the voltage difference generated by the low-frequency electric power current on the inductor is not high, the current directions of the low-frequency electric power currents in the two paths are reverse to each other, most of the generated magnetic field will mutually destruct each other or one another, and the magnetic saturation problem does not tend to occur. The high-frequency common mode noise induces the voltage difference and current on two ends of the coil. If the common mode noise currents on two wires have the same value, then when the magnetic field generated by the active common mode suppression current can completely replace the magnetic field generated by the active common mode suppression current equal to 0, and it is possible to significantly reduce the common mode noise current flowing through the common mode coils CMC1 and CMC2 of the common mode choke.

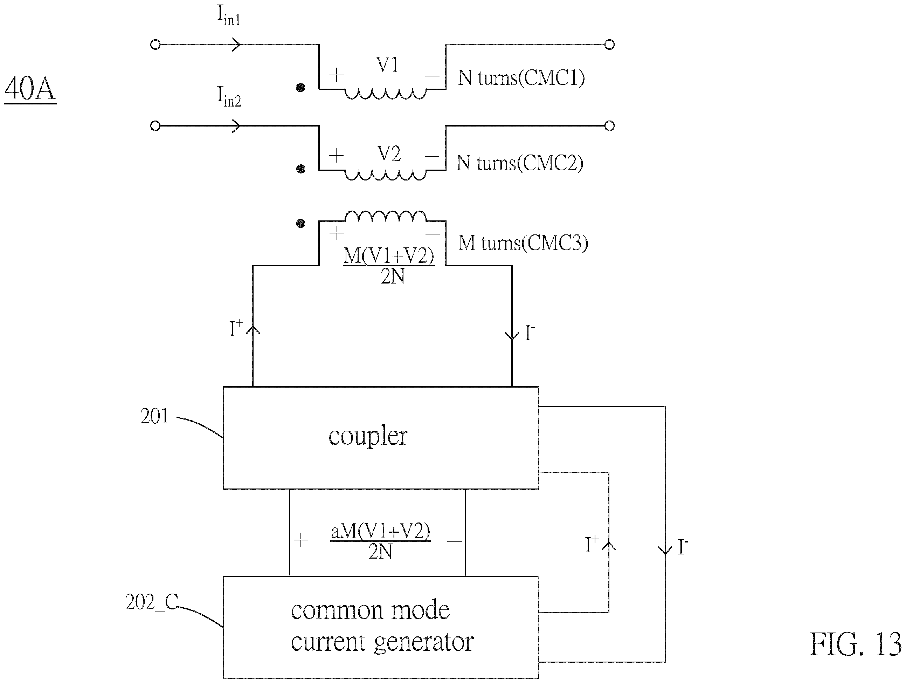

FIG. 13 is a schematic view showing an active common mode choke and power line filter circuit 40A in one embodiment. FIG. 13 is for strengthening the common mode inductance value of the common mode choke and has no effect on the differential mode noise suppression. In FIG. 13, the copper wires, through which the two paths of noise currents Iᵢₙ₁ and Iᵢₙ₂ flow, are thick wires because the high power currents flow, while the coil, through which the active suppression current I⁺/I⁻ flows, only needs to use the thin wire.

In this embodiment, the active common mode choke and power line filter circuit 40A includes three sets of common mode coils CMC1 to CMC3, wherein the electric power current flows through two sets of the common mode coils CMC1 and CMC2, the active suppression current I⁺ flows through another set of the common mode coil CMC3. The active common mode choke circuit 40A is coupled to the common mode coils CMC1 to CMC3. The active common mode choke circuit 40A includes a coupler 201 and a common mode current generator 202_C for generating the correspondingly proportional suppression current I⁺ according to the common mode noise currents Iᵢₙ₁ and Iᵢₙ₂ and replacing the magnetic field generated by the common mode noise current on the core(s) of the common mode coils CMC1 to CMC3. For an integral isolator or an EMI suppression circuit, a capacitor (not shown) is parallelly connected between the ports of the two sets of the coils CMC1 and CMC2 of the common mode choke, through which the electric power current flows, to filter out the differential mode noise.

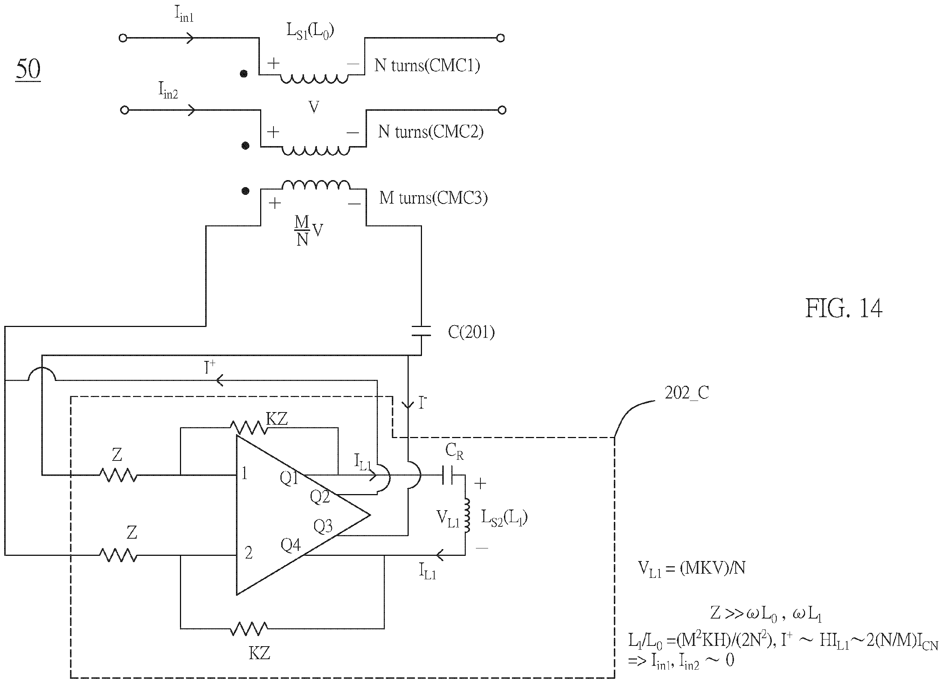

In this embodiment, the ratio of the numbers of loops of CMC1, CMC2 and CMC3 of the common mode choke is N: N: M, where N and M are constants. If the noise currents Iᵢₙ₁ and Iᵢₙ₂ (the noise currents are composed of the common mode noise and the differential mode noise) flow through the common mode coils CMC1 and CMC2, then the common mode coils CMC1 and CMC2 generate the voltages V1 and V2, respectively, and the common mode coil CMC3 generates a coupling voltage M(V1+V2)/2N. The common mode current generator 202_C receives the coupling voltage (aM(V1+V2))/N through the coupler 201 or another coupler to generate the suppression current I⁺, where "a" is generally equal to about 1 within the communication frequency band. The common mode current generator 202_C utilizes the same coupler 201 or another coupler to couple and output the correspondingly proportional suppression current I⁺ to replace the magnetic field generated by the common mode noise current on the core of the common mode choke. If the problem of non-ideal mutual inductance between the coils, such as magnetic flux leakage, is not considered, then the replaced magnetic field only has the common mode portion, and the magnetic field generated by the differential mode noise cannot be suppressed, another capacitor or differential mode inductor needs to be used to filter out the differential mode noise. As schematically shown in FIG. 14, in an active common mode choke circuit 50, the common mode current generator 202_C may be implemented by an amplifier, which drives, on its load side, another reference inductor L_{S2} having the inductance value L₁. In this embodiment, the amplifier has a first input terminal 1 and a second input terminal 2 respectively coupled to the input terminal and the output terminal of the common mode coil CMC3. In addition, the amplifier has a first output terminal Q1, a second output terminal Q2, a third output terminal Q3 and a fourth output terminal Q4, wherein the first output terminal Q1 and the fourth output terminal Q4 function as the load side serially connected to the reference inductor L_{S2}. The first input terminal 1 and the third output terminal Q3 are parallelly coupled to the coupler 201 (the capacitor C in this embodiment), the second output terminal Q2 is parallelly coupled to the second input terminal 2, and the matching resistance Z is present between the first input terminal 1 and the coupler 201. The matching resistance Z is present between the second input terminal 2 and the second output terminal Q2. The first input terminal 1 and the first output terminal Q1 are parallelly connected to the matching resistor KZ. The second input terminal 2 and the fourth output terminal Q4 are parallelly connected to the matching resistor KZ. In this embodiment, the reference inductor L_{S2} is serially connected to a large capacitor CR.

If the noise current Iᵢₙ₁=Iᵢₙ₂=I_{CN} (i.e., the noise is the pure common mode noise, the suppression current I⁺ is equal to 0, and the crossover voltages generated by the common mode noise currents Iᵢₙ₁ and Iᵢₙ₂ on the N turns common mode coils CMC1 and CMC2 are equal to V), then the common mode coil CMC3 functioning as the suppression coil (M turns) senses the voltage equal to (M/N) ×V. In an ideal condition, the suppression current I⁺= (2N/M) I_{CN}, and most of the common mode noise current can be suppressed at this time. As shown in FIG. 14, the suppression current I⁺ can drive a reference inductor L_{S2} (the amplifier gives the voltage V_{L1} on two ends of the reference inductor L_{S2}) through an amplifier, and the reference inductor generates another correspondingly proportional (H times) current to generate the suppression current I⁺. If the single-side coils of the common mode coil CMC1 and the common mode coil CMC2 have N turns, the inductance value is L₀, and the amplifier has the magnification K, then the inductance value L₁ of the reference inductor LS2 is equal to (M²×K×H/(2N²))L₀. In this manner, the generated suppression current I⁺ is equal to about (2N/M)I_{CN}. That is, if the suppression current I⁺ equal to (2N/M)I_{CN} can be generated, then the most of the common mode noise current can be suppressed, so that Iᵢₙ₁ or Iᵢₙ₂ approaches 0.

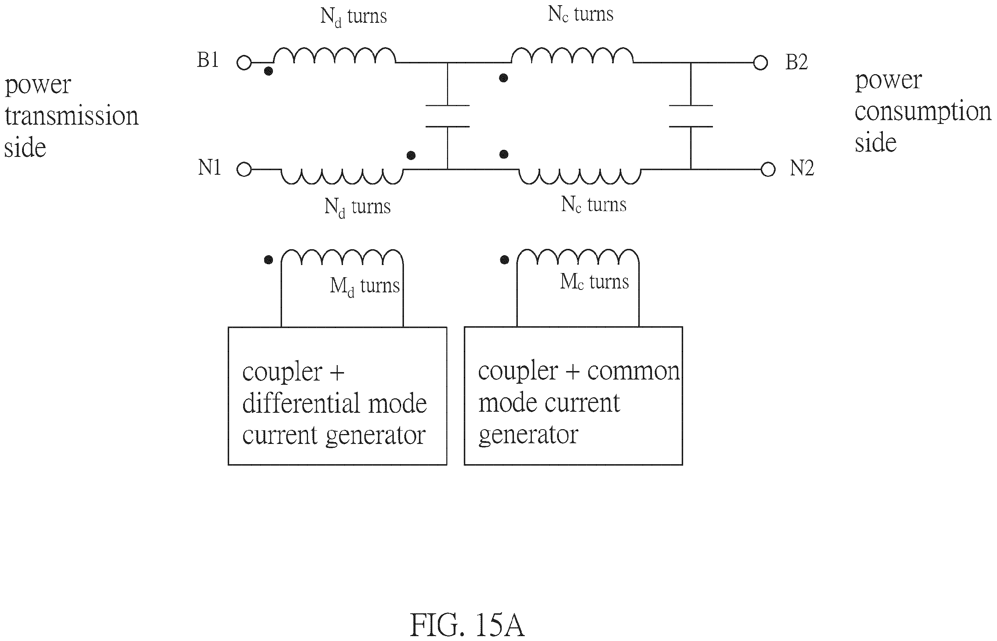

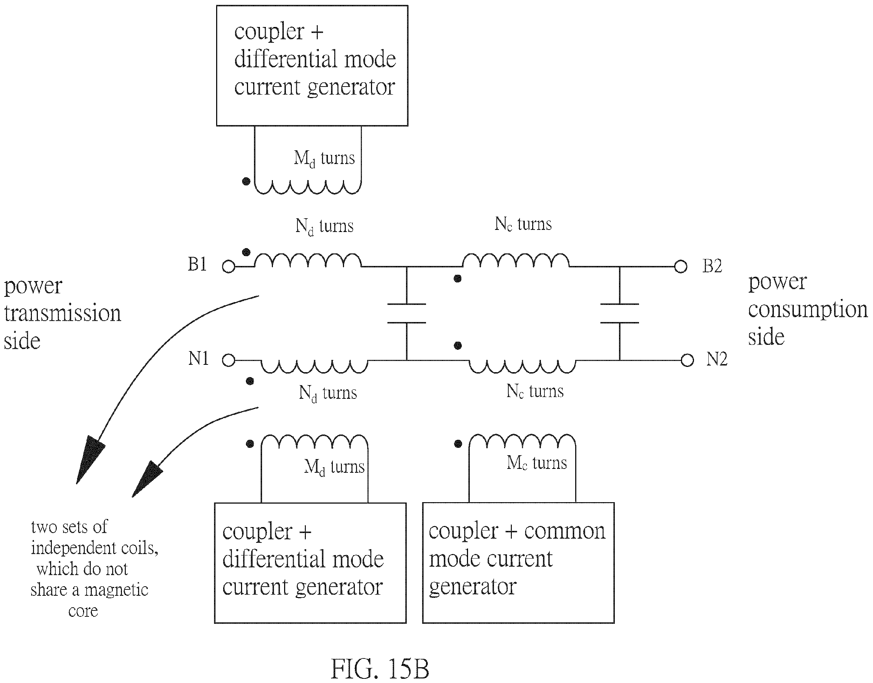

If the source of the common mode noise current comes from the power transmission side (e.g., the radiation noise in the air), then this noise cannot be filtered by the isolator because it is mixed with the communication signal on the power transmission side. At this time, if the influence thereof needs to be decreased, then we can only hope that the common mode noise will not transform into the differential mode noise during the transmission process, wherein the general communication signal transceiver has the good common mode noise immunity). Please refer to FIGS. 15A and 15B. FIGS. 15A and 15B are schematic views respectively showing symmetrical differential mode choke circuits. If the differential mode choke of the isolator may be in the symmetrical form, then the mode approaches the common mode when the common mode noise of the power consumption side or the common mode noise from the remote power transmission side reaches B1/N1 (transceiver port), and the influence on the communication can be decreased. At present, the isolators on the market are the single-side differential mode coils shown in FIG. 10A mainly because of the lower manufacturing cost and because the application is the short distance indoors without the consideration of the influence of the radiation or the coupling common mode noise. The symmetrical isolator is more applicable to the outdoor long-distance power lines, and can resist the radiation or the coupling noise (e.g., the underground noise couples to the buried wires) from interfering the communication signal transmission. The difference between FIGS. 15A and 15B resides in that FIG. 15B has two independent cores with coils. If the active suppression circuits are added thereto, then the suppression of the differential mode noise and the common mode noise can be enhanced concurrently, wherein Nc, Mc, Nd and Md shown in FIGS. 15A and 15B represent the numbers of turns of the coils.

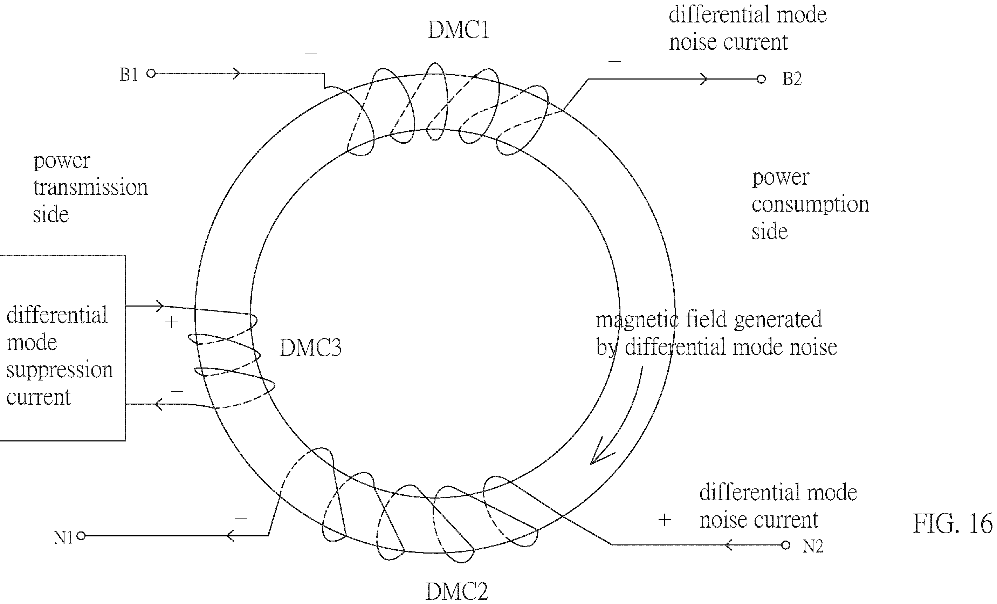

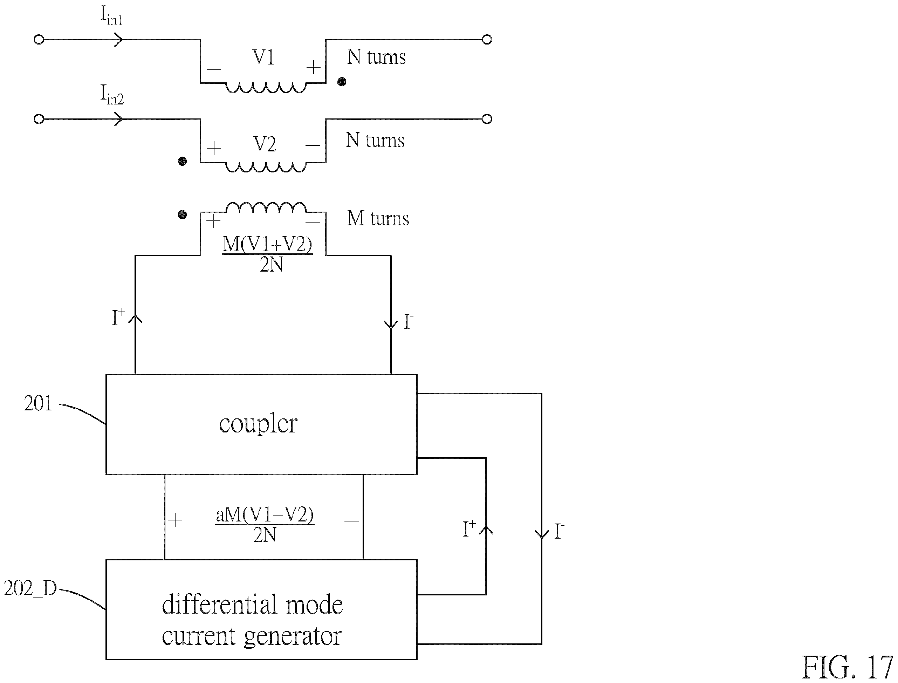

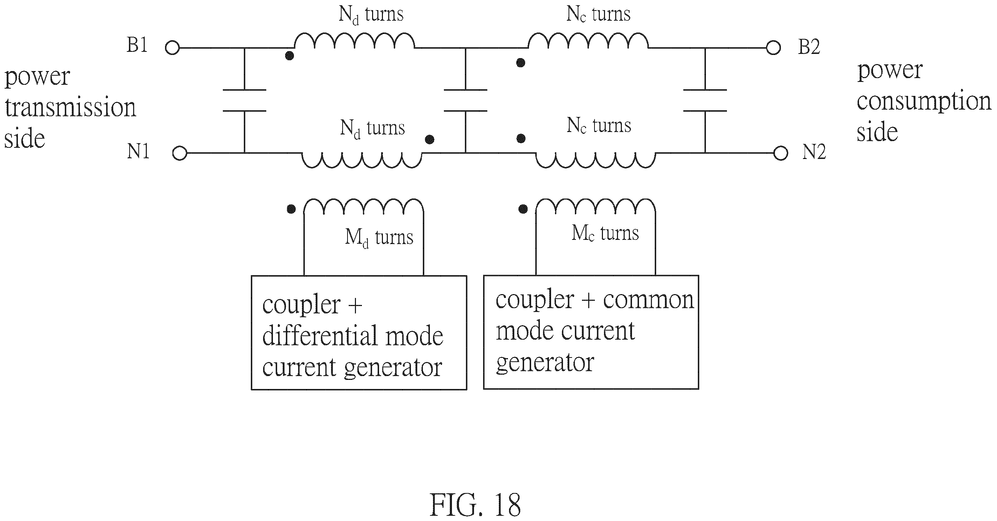

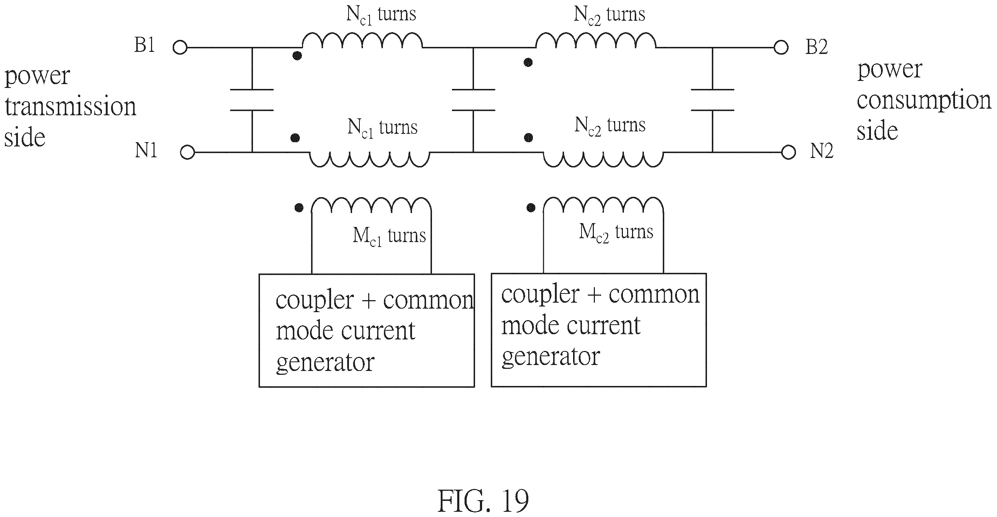

Referring to FIG. 16, this disclosure may also function as a differential mode choke. FIG. 16 is a schematic view showing an active differential mode choke circuit 70, wherein the differential mode coils DMC1 to DMC3 may also enhance the suppression effect of the differential mode noise according to the same principle. The symmetrical differential mode chokes DMC1 and DMC2 are beneficial to the more balanced common mode noise currents on two circuits. Thus, a relatively small proportion is converted into the differential mode noise appearing on the power transmission side. Finally, a differential mode suppression current generator 202_D outputs a differential mode suppression current to suppress the differential mode noise, and to replace the magnetic field generated by differential mode noise currents on the core(s) of the differential mode coils DMC1 and DMC2. Its corresponding schematic circuit diagram is shown in FIG. 17, wherein the principle thereof is the same as that mentioned hereinabove. In an ideal condition, this circuit only can suppress the differential mode noise but cannot suppress the common mode noise. The overall active isolator circuit is shown in FIG. 15A. The concepts mentioned hereinabove may also be applied to the EMI suppression circuit. Because no power transmission side has the high impedance requirement, capacitors may also be added to two sides, as shown in FIG. 18. The key points of some EMI suppression circuit reside in suppressing the common mode noise current, and the differential mode noise current only needs to be filtered out according to the magnetic flux leakage effect of the common mode choke and by capacitor. In this circuit, the differential mode inductor can be discarded, and only the common mode choke and the capacitor are used, as shown in FIG. 19.

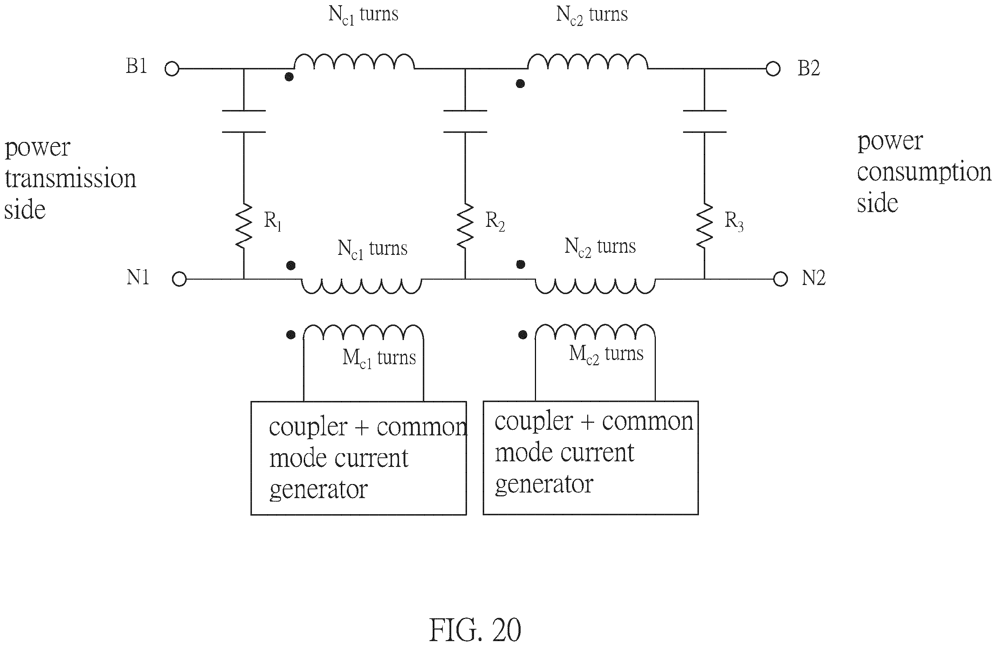

In an actual active inductance reinforcing circuit, the oscillation needs to be suppressed, and the quality factor Q of LC often needs to be decreased. So, some small resistors often need to be disposed on paths of capacitors. These resistors, resistors R1 to R3 as shown in FIG. 20, decrease the effect of filtering the differential mode noise, but keep the overall circuit stable without oscillation, so that the circuit cannot produce undesired oscillations, wherein Nc, Nc1, Nc2, Mc, Mc1, Mc2, Nd, Nd1, Nd2 and Md shown in FIGS. 18 to 20 represent the numbers of turns of the coils.

## Claims

1. A circuit for enhancing the inductance of a high current inductor, the circuit comprising:
a main inductor, wherein a first current correlating to a communication signal flows through the main inductor, which generates a voltage correlating to the communication signal, and the main inductor is disposed on a power supply line, while an alternating current or a direct current flows through the main inductor; a coupler sensing a voltage across two ends of the main inductor or a predetermined ratio of the voltage across the two ends of the main inductor, and generating a coupling voltage; and
a current generator receiving the coupling voltage through the coupler or another coupler to generate a second current, wherein the current generator utilizes the coupler or the another coupler to couple the second current to the main inductor, and the second current flows back to the coupler and then back to the current generator;
wherein an objective of the current generator is to replicate the first current to generate the second current, and a phase of the second current is close to a phase of the first current flowing through the main inductor, so that the second current flows into the main inductor to suppress the first current driven by the communication signal of the circuit itself.

2. The circuit according to claim 1, wherein the current generator receives, through the coupler or the another coupler, the coupling voltage to generate the second current, and the second current flows to a coil wound around a same winding core of the main inductor.

3. The circuit according to claim 1, wherein the circuit comprises:
a first inductor parallelly connected between the coupler and the main inductor, wherein the first inductor and the main inductor are serially connected together and wound around a same winding core;
wherein a diameter of a coil of the first inductor is smaller than a diameter of a coil of the main inductor, and a current of the communication signal only flows through the coil of the first inductor.

4. A circuit for enhancing the inductance of a high current inductor, the circuit comprising:
a main inductor, wherein a first current correlating to a communication signal flows through the main inductor to generate a voltage correlating to the communication signal, wherein the main inductor is disposed on a power supply line, while an alternating current or a direct current flows through the main inductor;
a first inductor generating another voltage according to a voltage across two ends of the main inductor or a predetermined ratio of the voltage across the two ends of the main inductor;
a coupler sensing a voltage across two ends of the first inductor or a predetermined ratio of the voltage across the two ends of the first inductor, and generating a coupling voltage; and
a current generator receiving, through the coupler or another coupler, the coupling voltage to generate a second current, wherein the current generator couples the second current using the coupler or the another coupler so that the main inductor generates a counter-electromotive force; wherein an objective of the current generator is to generate the second current to replicate a magnetic field, generated by the first current in a core of the main inductor, and suppress the first current driven by the communication signal of the circuit itself.

5. The circuit according to claim 4, wherein the first inductor is coupled to the coupler, the first inductor and the main inductor are wound around a same core, and the first inductor and the main inductor form a first transformer; wherein the second current flows into the first inductor but does not flow into the main inductor to suppress the first current flowing through the main inductor, and the first transformer isolates a high voltage of a power transmission side from entering the coupler.

6. The circuit according to claim 1 or 4, wherein the current generator has one or multiple amplifiers and a reference inductor to function as a current replicating circuit working according to a voltage provided from the amplifier or the amplifiers to two ends of the reference inductor, and a voltage across the two ends of the reference inductor and a voltage across the two ends of the main inductor have a proportional relationship, so a current flows into the reference inductor, and the current replicating circuit generates the second current, which is to be outputted and has a proportional relationship to a current on the reference inductor.

7. The circuit according to claim 1 or 4, wherein the current generator comprises an analog-to-digital converter, a digital inductor current calculator and a digital-to-analog current converter; wherein the digital inductor current calculator is a digital circuit, the analog-to-digital converter digitizes the coupling voltage and then transmits a digitized result to the digital inductor current calculator, which calculates a digitized message of an output current of the first inductor, and the digitized message is transmitted to the digital-to-analog current converter to generate the second current.

8. The circuit according to claim 4, wherein the circuit has the first inductor and the main inductor forming a transformer, the current generator is a differential linear driver comprising a first input terminal, a second input terminal, a first output terminal, a second output terminal, a third output terminal and a fourth output terminal; wherein the first input terminal and the second input terminal are respectively coupled to an input terminal and an output terminal of the first inductor, and the first output terminal and the fourth output terminal function as a load side serially connected to a second inductor; the first input terminal and the third output terminal are parallelly coupled to the coupler, the second output terminal is parallelly coupled to the second input terminal, and a first matching resistance is formed between the first input terminal and the coupler; a second matching resistance is formed between the second input terminal and the second output terminal; the first input terminal and the first output terminal are parallelly connected to a third matching impedance; and the second input terminal and the fourth output terminal are parallelly connected to a fourth matching impedance.

9. The circuit according to claim 8, wherein a matching impedance Z of the differential linear driver has an impedance value greater than ωL₀ or ωL₁, where ω is an angular frequency of a communication frequency band, L₀ is an inductance value of the main inductor, and L₁ is an inductance value of the second inductor.

10. The circuit according to claim 5, wherein the circuit comprises a linear amplifier disposed between the power transmission side and a power consumption side, wherein the linear amplifier couples a second transformer and a third transformer to the power transmission side and the power consumption side, respectively; input terminals of the linear amplifier are coupled to two ends of a secondary coil of the second transformer, the input terminals of the linear amplifier and the two ends of the secondary coil of the first transformer are respectively coupled to first input impedances, output terminals of the linear amplifier are coupled to two ends of a primary coil of the third transformer, and second output impedances are respectively parallelly connected between the output terminals and the input terminals of the linear amplifier.

11. The circuit according to claim 5, wherein the circuit has a second inductor, the second inductor and another main inductor form a second transformer, the first transformer has a first coupler and a first current generator corresponding to each other, the second transformer has a second coupler and a second current generator corresponding to each other, the second coupler has two positive output terminals with the second currents, one of the positive output terminals of the second coupler is coupled to a positive output terminal of the first coupler with the second current, and the other one of the positive output terminals of the second coupler is coupled to an input terminal of the second inductor; wherein a filter capacitor is parallelly connected to a power consumption side of the circuit, wherein if the filter capacitor has an impedance, in a communication frequency band, far less than an impedance of the main inductor, then an input voltage of the power transmission side is equivalent to a sum of voltage drops of the main inductors, wherein the second currents outputted from the current generators are divided into two sets according to a ratio of the voltage drops of the main inductors in the first transformer and the second transformer, wherein a maximum one of the second currents is coupled to a location close to the power consumption side.

12. The circuit according to claim 11, wherein when the first coupler and the second coupler have a coupling coefficient equal to 1, reference voltages of the first current generator and the second current generator are equal to a sum of crossover voltages of the first inductor and the second inductor, and the reference voltage of the first current generator comes from the crossover voltage of the first inductor.

13. The circuit according to claim 4, wherein when the circuit is in a low frequency alternating current frequency band, the current generator cannot generate the second current flowing into a coil of the first inductor, and because the current generator has a higher output impedance, the current generator is equivalent to being open circuited.
